# EUROPEAN PATENT SPECIFICATION

(11) **EP 3 379 595 B1**
(45) Date of publication and mention of the grant of the patent: **23.11.2022**
(21) Application number: 17162782.1
(22) Date of filing: 24.03.2017
(51) Int. Cl.: H01M 10/04, H01M 50/502, H01M 4/75

(54) **STORAGE DEVICE AND METHOD**
ENERGIESPEICHERUNGSANLAGE UND PRODUKTIONSVERFAHREN
DISPOSITIF DE STOCKAGE ET PROCÉDURE DE PRODUCTION

(43) Date of publication of application: 26.09.2018
(73) Proprietor: Vestel Elektronik Sanayi ve Ticaret A.S., 45030 Manisa (TR); Özyegin University, 34794 Istanbul (TR)
(72) Inventor: MEMISOGLU, Görkem, 45030 Manisa (TR); GULBAHAR, Burhan, 45030 Manisa (TR)
(74) Representative: Kehl, Ascherl, Liebhoff & Ettmayr Patentanwälte Partnerschaft mbB

(56) References cited:
- WO-A1-2015/003038
- WO-A1-2017/019663
- US-A1- 2014 023 920
- US-A1- 2016 196 932
- US-B1- 8 663 730
- D GOLODNITSKY ET AL: "Progress in three-dimensional (3D) Li-ion microbatteries", SOLID STATE IONICS, vol. 177, no. 26-32, 31 October 2006 (2006-10-31), pages 2811-2819, XP55369427, NL ISSN: 0167-2738, DOI: 10.1016/j.ssi.2006.02.048

## Description

### TECHNICAL FIELD

The invention relates to a storage device for providing electrical power and a corresponding method.

### BACKGROUND

Storage devices, in particular assembled batteries, typically provide limited contact areas between different anodes when connected in parallel, for example. Limited contact areas can reduce performance and can increase flow resistance of a corresponding current within the storage device. Further, electrical connections between such areas are typically rigid which can lead to a limited applicability of assembled batteries. Therefore the scope of application is critical for said assembled batteries to ensure their functionality.

Document EP 1705743A1 relates to a battery module having a plurality of unit cells. In the battery module, the unit cells are spaced apart from each other by a predetermined distance and are connected in series or in parallel.

Document US 2005/0174092A1 relates to a battery system for use in a vehicle, which includes a plurality of electrically connected lithium batteries. According to one embodiment, the battery system comprises a module that includes a plurality of (e.g. ten) lithium batteries electrically connected in series. According to another embodiment, the module may be coupled to a wire or a cable via a connector so as to connect the module to another module or to a vehicle electrical system.

Document US 8,663,730 describes a method for fabricating a three-dimensional battery with a porous dielectric separator, wherein a structural layer is provided and a plurality of electrodes are fabricated, each electrode protruding from the structural layer. A porous dielectric material is deposited on the plurality of electrodes.

Document WO 2017/019663 relates to a battery and its method of manufacture. The method includes forming a cathode layer proximate to a cathode current collector, forming an electrolyte layer proximate to the cathode layer and an anode layer proximate to the electrolyte layer. An anode current collector layer is formed proximate to to the anode layer. At least one of the cathode current collector layer and the anode current collector layer includes a plurality of graphene monolayers.

Document US 2016/0196932 relates to a method of manufacturing trenched electrochemical, double-layer super/ultracapacitors. According to this method, a first trenched electrode structure is formed with cylindrical trench openings in a silicon substrate, and a second trenched electrode structure is formed with a complementary shape to the cylindrical trench openings in the first trenched electrode structure. The first and second trenched electrode structure are so sized relative to each other that when the first trenched electrode structure is inserted in the second trenched electrode structure, a gap is left therebetween. The gap is filled with an electrolyte to form the capacitor. Porous material such as graphene or nanotubes is introduced into the electrolyte in order to increase the surface area.

Document WO 2015/003038 relates to carbon nanotube - graphene hybrid structures for separator-free silicon sulphur batteries.

Accordingly, there is a need for an improved storage device for providing or storing electrical power.

### SUMMARY OF THE INVENTION

The present invention provides a storage device with the features of claim 1 and a manufacturing method with the features of claim 6.

The storage device for providing or storing electrical power comprises a plurality of unit cells, wherein each of the unit cells comprises an inner surface and an outer surface. The inner surface of each of the unit cells is configured to provide an electrical contact with a first electrically conductive plate - for example anode side - and the outer surface of each of the unit cells is configured to provide an electrical contact with a second electrically conductive plate - for example cathode side.The plurality of unit cells are configured to be arranged between the first and second electrically conductive plates. The first electrically conductive plate comprises a two dimensional material. The first electrically conductive plate can be in particular made of the two dimensional material. The inner surface comprises a flexible polymer sheet with an anode material and the outer surface comprises a flexible metal sheet with a cathode material. A separator is configured to be arranged between the inner surface and the outer surface.

The method of manufacturing a storage device comprises the steps of producing a plurality of unit cells, wherein each of the unit cells comprises an inner surface and an outer surface, such that the inner surface of each of the unit cells is configured to provide an electrical contact with a first electrically conductive plate and the outer surface of each of the unit cells is configured to provide an electrical contact with a second electrically conductive plate, wherein the first electrically conductive plate comprises a two dimensional material, the inner surface comprises a flexible polymer sheet with an anode material and the outer surface comprises a flexible metal sheet with a cathode material. The method further comprises arranging a separator between the inner surface and the outer surface, arranging the plurality of unit cells between the first and second electrically conductive plates, and electrically connecting the plurality of unit cells with one another in parallel by using the second electrically conductive plate and the first electrically conductive plate.

The storage device can be an electric battery. The unit cells can be electrochemical cells. The storage device is configured to provide power to electrical devices such as flashlights, smartphones and electrical cars. For example, when the storage device is supplying power, its second electrically conductive plate can be the cathode and the first electrically conductive plate can be the anode.

The present invention uses the finding that two dimensional materials - also called materials with two dimensional crystal structure, 2D topological materials or single layer materials - can increase a contact area between the inner surface and the first electrically conductive plate. Therefore, electrically contacting the inner surface, for example anode side, with additional connection means such as wires, bridges or cables can be avoided.

The present invention therefore provides the first electrically conductive plate with the two dimensional material.

Further embodiments of the present invention are subject of the further subclaims and of the following description, referring to the drawings.

In one embodiment, the two dimensional material comprises graphene, molybdenum disulphide (MOS₂) or black phosphorus. Thus, based on the material properties of these materials with two dimensional crystal structure more efficient flow of electrical current with reduced resistance can be obtained. Further these materials, in particular graphene, can be flexible. Therefore, the storage device can be additionally protected against external pressure or force. Additionally, these materials, in particular graphene, can be used to reduce the weight of the storage device. This is beneficial for mobile devices. That is, that these materials are able to be durable and strong and simultaneously have low weight.

In another embodiment, each of the unit cells is ring-shaped, annular or circular. The unit cells can be toroidal unit cells, for example. Each of the unit cells comprises a through hole, wherein the inner surface defines the through hole. The outer surface defines an outer circumference of each of the unit cell and a separator or a core is arranged between the inner surface and the outer surface of each of the unit cells. This form can be in particular stable against external pressure.

In a further embodiment, a multi-cell comprises at least two ring-shaped unit cells, wherein the at least two ring-shaped unit cells of the multi-cell are concentrically interlaced to each other and spaced apart from each other. For example, the multi-cell comprises three unit cells, wherein the three unit-cells are concentrically interlaced or nested within one another within the multi-cell. Thus, each of the ring-shaped unit cells has different inner and outer diameters. This set-up provides the multi-cell, wherein the at least two ring-shaped unit cells of the multi-cell are electrically connected in parallel via the first and the second electrically conductive plates, wherein the first electrically conductive plate comprises the two dimensional material.

In one embodiment, the flexible polymer sheet can be a Polyethylenterephthalate (PET) sheet or foil, on which the anode material, for example the two dimensional material, such as graphene, can be deposited by chemical vapor deposition or spin coating, for example. The flexible metal sheet can be an aluminum sheet or foil on which the cathode material is deposited by chemical or physical vapor deposition, for example.

In another embodiment, the inner surface and the first electrically conductive plate comprise the two dimensional material. Therefore the battery device can be additionally driven in an energy efficient manner.

The herein described features for the storage device are also disclosed for the manufacturing method and vice versa.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments, which are specified in the schematic figures of the drawings, in which:
- Fig. 1: shows a schematic bottom view of an embodiment of a unit cell according to the present patent application;
- Fig. 2: shows a schematic top view of an embodiment of a unit cell according to the present patent application;
- Fig. 3: shows a schematic top view of an embodiment of a multi-cell according to the present patent application;
- Fig. 4: shows a schematic cross-sectional view of an embodiment of a storage device according to the present patent application;
- Fig. 5: shows a schematic perspective view of another embodiment of a storage device according to the present patent application; and
- Fig. 6: shows a flow diagram of an embodiment of a manufacturing method according to the present patent application.

In the figures like reference signs denote like elements unless stated otherwise.

### DETAILED DESCRIPTION OF THE DRAWINGS

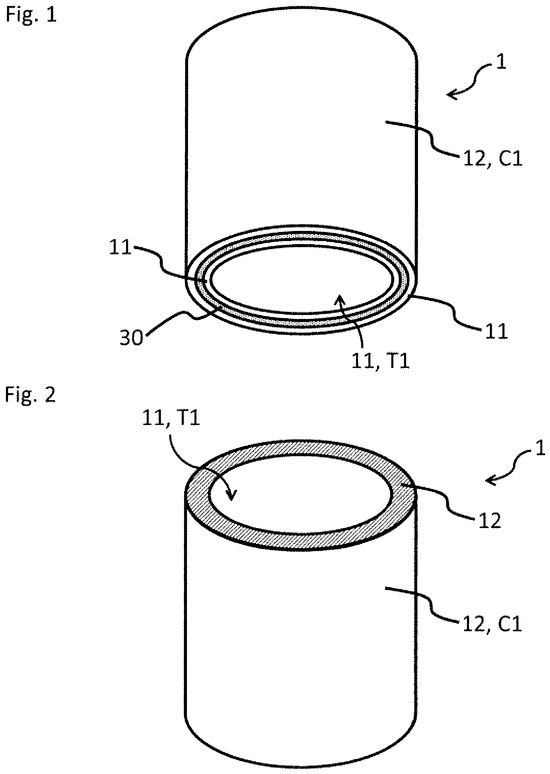

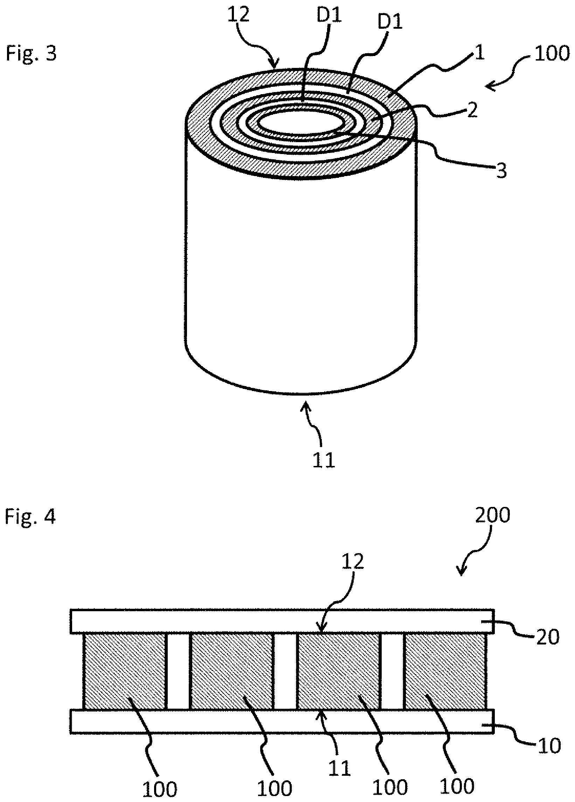

Fig. 1 shows a schematic bottom view of an embodiment of a unit cell 1. The unit cell 1 comprises an inner surface 11 and an outer surface 12. The inner surface 11 of the unit cell 1 is configured to provide an electrical contact with a first electrically conductive plate 10. The outer surface 12 of the unit cell 1 is configured to provide an electrical contact with a second electrically conductive plate 20 (see Fig. 4). The inner surface 11 therefore can also cover a bottom side of the unit cell 1. The inner surface 11 can comprise a two dimensional material. The bottom side of the unit cell 1 can comprise a screw thread 30. Therefore, a screw type anode stipe (stalk or stem) can be provided.

Fig. 2 shows a schematic top view of an embodiment of a unit cell 1. As shown in Fig. 2 the outer surface 12 of the unit cell 1 can also cover a top side of the unit cell 1. The outer surface 12 of the unit cell 1 is configured to provide an electrical contact with the second electrically conductive plate 20. The inner surface 11 and the outer surface 12 are in particular electrically isolated from each other by a separator 13. The unit cell 1 of Fig. 1 and Fig. 2 is ring-shaped.

The unit cell 1 comprises a through hole T1, wherein the inner surface 11 defines the through hole T1. The outer surface 12 defines an outer circumference C1 of the unit cell 1 and the separator 13 or a core is arranged between the inner surface 11 and the outer surface 12 of the unit cell 1.

The inner surface 11 comprises a flexible polymer sheet with an anode material and the outer surface 12 comprises a flexible metal sheet with a cathode material, and the separator 13 (not shown) is configured to be arranged between the inner surface 11 and the outer surface 12 of the unit cell 1.

Fig. 3 shows a schematic top view of an embodiment of a multi-cell 100. The multi-cell 100 comprises three unit cells 1, 2, 3. Each of the unit cells 1, 2, 3 comprises the inner surface 11 and the outer surface 12 as shown in Fig. 1 and Fig. 2. Each of the three unit cells 1, 2, 3 are ring-shaped. As shown in Fig. 3 the ring-shaped unit cells 1, 2, 3 of the multi-cell 100 are concentrically interlaced to each other and spaced apart from each other by a space D1. The space D1 can be filled with air or an electrically isolating material.

Fig. 4 shows a schematic cross-sectional view of an embodiment of a storage device 200.

The storage device 200 of Fig. 4 shows four multi-cells 100 of Fig. 3. Each of the multi-cells 100 comprises therefore three unit cells 1, 2, 3. The four multi-cells 100 are arranged between the first electrically conductive plate 10 and second electrically conductive plate 20, wherein the first electrically conductive plate 10 comprises the two dimensional material. The inner surface 11 can be directly contacted the first electrically conductive plate 10 and the outer surface 12 can be directly contacted with the second electrically conductive plate 20. In other words, the first electrically conductive plate 10 can be the anode side and the second electrically conductive plate 20 can be the cathode side of the storage device 200. The first electrically conductive plate 10 and the second electrically conductive plate 20 connect the multi-cells 100 in parallel, wherein each of the multi-cells 100 comprises the unit cells 1, 2, 3.

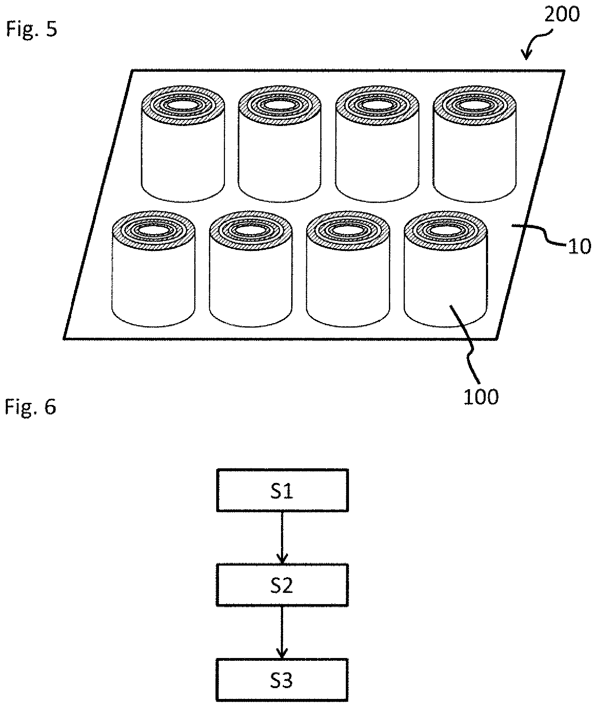

Fig. 5 shows a schematic perspective view of another embodiment of a storage device 200.

Fig. 5 is based on Fig. 4 and shows storage device 200 comprising the multi-cells 100 in a 4x2 matrix. In Fig. 5 the second electrically conductive plate 20 is not shown for a better illustration of an arrangement of the multi-cells 100 within the here illustrated 4x2 matrix.

Fig. 6 shows a flow diagram of an embodiment of a manufacturing method for a storage device 200.

The manufacturing method starts with producing S1 a plurality of unit cells 1, 2, 3, wherein each of the unit cells 1, 2, 3 comprises an inner surface 11 and an outer surface 12, such that the inner surface 11 of each of the unit cell 1, 2, 3 is configured to provide an electrical contact with a first electrically conductive plate and the outer surface 12 of each of the unit cells 1, 2, 3 is configured to provide an electrical contact with a second electrically conductive plate 20. A second step S2 comprises arranging the plurality of unit cells 1, 2, 3 between the first electrically conductive plate 10 and the second electrically conductive plate 20. A step S3 comprises electrically connecting S3 the plurality of unit cells 1, 2, 3 with one another in parallel by using the second electrically conductive plate 20 and the first electrically conductive plate 10, wherein the first electrically conductive plate 10 comprises a two dimensional material. Additionally the step S1 can comprise producing a multi-cell 100 with at least two ring-shaped unit cells 1, 2, 3 such, that said ring-shaped unit cells 1, 2, 3 are concentrically interlaced to each other and spaced apart from each other within the multi-cell 100.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope of protection as set forth in the appended claims.

For moving objects (such as an electrical vehicle), a battery containing a 'screw type anode stipe' can be used with a 'screw type first electrically conductive plate (e.g. on the anode side)'. However, when both the 'anode and cathode stipes are screw type' with a 'screw type first electrically conductive plate (e.g. on the anode side)', batteries can be used one after the other and also side by side (in this way, there will be longer-term energy storage with more batteries in the system).

The present invention provides storage device 200 for providing electrical power. The storage device 200 comprises a plurality of unit cells 1, 2, 3, wherein each of the unit cells 1, 2, 3 comprises an inner surface 11 and an outer surface 12, wherein the inner surface 11 of each of the unit cells 1, 2, 3 is configured to provide an electrical contact with a first electrically conductive plate 10 and the outer surface 12 of each of the unit cells 1, 2, 3 is configured to provide an electrical contact with a second electrically conductive plate 20. The plurality of unit cells 1, 2, 3 are configured to be arranged between the first and second electrically conductive plates 10, 20 and the first electrically conductive plate 10 comprises a two dimensional material. The present invention further provides a corresponding method.

### List of reference signs

- 200: storage device
- 1, 2, 3: plurality of unit cells
- 100: multi-cell
- 10: first electrically conductive plate (e.g. anode side)
- 20: second electrically conductive plate (e.g. cathode side)
- 11: inner surface
- 12: outer surface
- 13: separator
- 30: screw

- C1: outer circumference
- D1: space
- T1: through hole
- S1 - S3: method steps

## Claims

1. A storage device (200) for providing electrical power, the storage device comprising:
a plurality of unit cells (1, 2, 3), wherein each of the unit cells (1, 2, 3) comprises an inner surface (11) and an outer surface (12), wherein:
the inner surface (11) of each of the unit cells (1, 2, 3) is configured to provide an electrical contact with a first electrically conductive plate (10),
the outer surface (12) of each of the unit cells (1, 2, 3) is configured to provide an electrical contact with a second electrically conductive plate (20), and
the plurality of unit cells (1, 2, 3) are configured to be arranged between the first and second electrically conductive plates (10, 20);
**characterized in that**:
the first electrically conductive plate (10) comprises a two dimensional material,
the inner surface (11) comprises a flexible polymer sheet with an anode material and the outer surface (12) comprises a flexible metal sheet with a cathode material, and
a separator (13) is configured to be arranged between the inner surface (11) and the outer surface (12).

2. A storage device (200) according to claim 1, wherein the two dimensional material comprises graphene, molybdenum disulphide or black phosphorus.

3. A storage device (200) according to any one of the preceding claims, wherein each of the unit cells (1, 2, 3) is ring-shaped.

4. A storage device (200) according to claim 3, wherein a multi-cell (100) comprises at least two of the ring-shaped unit cells (1, 2, 3), wherein the at least two ring-shaped unit cells (1, 2, 3) of the multi-cell (100) are concentrically interlaced to each other and spaced apart from each other.

5. A storage device (200) according to any one of the preceding claims, wherein the inner surface (11) and the first electrically conductive plate (10) comprise the two dimensional material.

6. A method of manufacturing a storage device (200), the method comprising the steps of:
producing (S1) a plurality of unit cells (1, 2, 3), wherein each of the unit cells (1, 2, 3) comprises an inner surface (11) and an outer surface (12), such that the inner surface (11) of each of the unit cell (1, 2, 3) is configured to provide an electrical contact with a first electrically conductive plate and the outer surface (12) of each of the unit cells (1, 2, 3) is configured to provide an electrical contact with a second electrically conductive plate (20), wherein the first electrically conductive plate (10) comprises a two dimensional material, the inner surface (11) comprises a flexible polymer sheet with an anode material and the outer surface (12) comprises a flexible metal sheet with a cathode material,
arranging a separator (13) between the inner surface (11) and the outer surface (12),
arranging (S2) the plurality of unit cells (1, 2, 3) between the first and second electrically conductive plates (10, 20), and
electrically connecting (S3) the plurality of unit cells (1, 2, 3) with one another in parallel by using the second electrically conductive plate (20) and the first electrically conductive plate (10).

7. Manufacturing method according to claim 6, wherein the step (S1) of producing the plurality of unit cells (1, 2, 3) comprises producing a multi-cell (100) with at least two ring-shaped unit cells (1, 2, 3), such that said ring-shaped unit cells (1, 2, 3) are concentrically interlaced to each other and spaced apart from each other within the multi-cell (100).

## Patentansprüche

1. Vorrichtung (200) zum Speichern zur Bereitstellung von elektrischer Energie, wobei die Vorrichtung Folgendes aufweist
eine Vielzahl von Einheitszellen (1, 2, 3), wobei jede der Einheitszellen (1, 2, 3) eine Innenfläche (11) und eine Außenfläche (12) aufweist, wobei:
die Innenfläche (11) jeder der Einheitszellen (1, 2, 3) so konfiguriert ist, dass sie einen elektrischen Kontakt mit einer ersten elektrisch leitenden Platte (10) bereitstellt,
die Außenfläche (12) jeder der Einheitszellen (1, 2, 3) so konfiguriert ist, dass sie einen elektrischen Kontakt mit einer zweiten elektrisch leitfähigen Platte (20) bereitstellt, und
die Mehrzahl von Einheitszellen (1, 2, 3) so konfiguriert ist, dass sie zwischen der ersten und der zweiten elektrisch leitenden Platte (10, 20) angeordnet sind;
**dadurch gekennzeichnet, dass**:
die erste elektrisch leitfähige Platte (10) ein zweidimensionales Material aufweist,
die innere Oberfläche (11) eine flexible Polymerfolie mit einem Anodenmaterial aufweist und die äußere Oberfläche (12) eine flexible Metallfolie mit einem Kathodenmaterial aufweist, und
ein Separator (13) so konfiguriert ist, dass er zwischen der Innenfläche (11) und der Außenfläche (12) angeordnet ist.

2. Vorrichtung (200) zum Speichern gemäß Anspruch 1, wobei das zweidimensionale Material Graphen, Molybdändisulfid oder schwarzen Phosphor aufweist.

3. Vorrichtung (200) zum Speichern gemäß einem der vorhergehenden Ansprüche, wobei jede der Einheitszellen (1, 2, 3) ringförmig ist.

4. Vorrichtung (200) zum Speichern gemäß Anspruch 3, wobei eine Multizelle (100) mindestens zwei der ringförmigen Einheitszellen (1, 2, 3) aufweist, wobei die mindestens zwei ringförmigen Einheitszellen (1, 2, 3) der Multizelle (100) konzentrisch zueinander verschränkt und voneinander beabstandet sind.

5. Vorrichtung (200) zum Speichern gemäß einem der vorhergehenden Ansprüche, wobei die Innenfläche (11) und die erste elektrisch leitende Platte (10) das zweidimensionale Material aufweist.

6. Verfahren zur Herstellung einer Speichervorrichtung (200), wobei das Verfahren die folgenden Schritte aufweist
Herstellen (S1) einer Vielzahl von Einheitszellen (1, 2, 3), wobei jede der Einheitszellen (1, 2, 3) eine innere Oberfläche (11) und eine äußere Oberfläche (12) aufweist, so dass die innere Oberfläche (11) jeder der Einheitszellen (1, 2, 3) so konfiguriert ist, dass sie einen elektrischen Kontakt mit einer ersten elektrisch leitenden Platte bereitstellt, und die äußere Oberfläche (12) jeder der Einheitszellen (1, 2, 3) konfiguriert ist, um einen elektrischen Kontakt mit einer zweiten elektrisch leitenden Platte (20) bereitzustellen, wobei die erste elektrisch leitende Platte (10) ein zweidimensionales Material aufweist, die innere Oberfläche (11) eine flexible Polymerfolie mit einem Anodenmaterial aufweist und die äußere Oberfläche (12) eine flexible Metallfolie mit einem Kathodenmaterial aufweist,
Anordnen eines Separators (13) zwischen der Innenfläche (11) und der Außenfläche (12),
Anordnen (S2) der Mehrzahl von Einheitszellen (1, 2, 3) zwischen den ersten und zweiten elektrisch leitenden Platten (10, 20), und
elektrisches Verbinden (S3) der Vielzahl von Einheitszellen (1, 2, 3) miteinander parallel unter Verwendung der zweiten elektrisch leitfähigen Platte (20) und der ersten elektrisch leitfähigen Platte (10).

7. Herstellungsverfahren gemäß Anspruch 6, wobei der Schritt (S1) des Herstellens der Mehrzahl von Einheitszellen (1, 2, 3) das Herstellen einer Mehrfachzelle (100) mit mindestens zwei ringförmigen Einheitszellen (1, 2, 3) aufweist, so dass die ringförmigen Einheitszellen (1, 2, 3) innerhalb der Mehrfachzelle (100) konzentrisch zueinander verflochten und voneinander beabstandet sind.

## Revendications

1. Dispositif de stockage (200) pour fournir de l'énergie électrique, le dispositif de stockage comprenant :
une pluralité de cellules unitaires (1, 2, 3), dans lequel chacune des cellules unitaires (1, 2, 3) comprend une surface interne (11) et une surface externe (12), dans lequel :
la surface intérieure (11) de chacune des cellules unitaires (1, 2, 3) est configurée pour fournir un contact électrique avec une première plaque électriquement conductrice (10),
la surface extérieure (12) de chacune des cellules unitaires (1, 2, 3) est configurée pour fournir un contact électrique avec une seconde plaque électriquement conductrice (20), et
la pluralité de cellules unitaires (1, 2, 3) est configurée pour être disposée entre les première et seconde plaques électriquement conductrices (10, 20) ;
**caractérisé en ce que** :
la première plaque électriquement conductrice (10) comprend un matériau bidimensionnel,
la surface intérieure (11) comprend une feuille polymère flexible avec un matériau d'anode et la surface extérieure (12) comprend une feuille métallique flexible avec un matériau de cathode, et
un séparateur (13) est configuré pour être disposé entre la surface intérieure (11) et la surface extérieure (12).

2. Dispositif de stockage (200) selon la revendication 1, dans lequel le matériau bidimensionnel comprend du graphène, du bisulfure de molybdène ou du phosphore noir.

3. Dispositif de stockage (200) selon l'une quelconque des revendications précédentes, dans lequel chacune des cellules unitaires (1, 2, 3) est de forme annulaire.

4. Dispositif de stockage (200) selon la revendication 3, dans lequel une cellule multiple (100) comprend au moins deux des cellules unitaires en forme d'anneau (1, 2, 3), dans lequel les au moins deux cellules unitaires en forme d'anneau (1, 2, 3) de la cellule multiple (100) sont entrelacées concentriquement l'une par rapport à l'autre et espacées l'une de l'autre.

5. Dispositif de stockage (200) selon l'une quelconque des revendications précédentes, dans lequel la surface interne (11) et la première plaque électriquement conductrice (10) comprennent le matériau bidimensionnel.

6. Méthode de fabrication d'un dispositif de stockage (200), la méthode comprenant les étapes consistant à :
produire (S1) une pluralité de cellules unitaires (1, 2, 3), dans lesquelles chacune des cellules unitaires (1, 2, 3) comprend une surface interne (11) et une surface externe (12), de sorte que la surface interne (11) de chacune des cellules unitaires (1, 2, 3) est configurée pour fournir un contact électrique avec une première plaque électriquement conductrice et la surface externe (12) de chacune des cellules unitaires (1, 2, 3) est configurée pour fournir un contact électrique avec une seconde plaque électriquement conductrice (20), dans laquelle la première plaque électriquement conductrice (10) comprend un matériau bidimensionnel, la surface intérieure (11) comprend une feuille polymère flexible avec un matériau d'anode et la surface extérieure (12) comprend une feuille métallique flexible avec un matériau de cathode,
disposer un séparateur (13) entre la surface intérieure (11) et la surface extérieure (12),
disposer (S2) la pluralité de cellules unitaires (1, 2, 3) entre les première et deuxième plaques électriquement conductrices (10, 20), et
connecter électriquement (S3) la pluralité de cellules unitaires (1, 2, 3) les unes aux autres en parallèle en utilisant la seconde plaque électriquement conductrice (20) et la première plaque électriquement conductrice (10).

7. Méthode de fabrication selon la revendication 6, dans laquelle l'étape (S1) de production de la pluralité de cellules unitaires (1, 2, 3) comprend la production d'une cellule multiple (100) avec au moins deux cellules unitaires en forme d'anneau (1, 2, 3), de sorte que lesdites cellules unitaires en forme d'anneau (1, 2, 3) sont entrelacées concentriquement les unes par rapport aux autres et espacées les unes des autres dans la cellule multiple (100).
